# EUROPEAN PATENT APPLICATION

(11) **EP 1 248 489 A1**
(43) Date of publication of application: **09.10.2002**
(21) Application number: 01202649.8
(22) Date of filing: 10.07.2001
(51) Int. Cl.: H04Q 9/00

(54) **Concentrator device for consumption remote management systems**

(30) Priority: 06.04.2001 IT MI000746
(71) Applicant: BTICINO S.p.A., 20154 Milano (IT)
(72) Inventor: Fabrizi, Fabrizio, 21100 Varese (IT)
(74) Representative: Zanardo, Giovanni

(57) **Abstract**

A concentrator device (1) for consumption remote management systems able to manage separatly and indipendently the applications relating to the management of measurement data regarding industrial or domestic consumptions, such as electricity, gas or water as compared to the applications which manage the information exchange between the central supply systems (200) and the display screens (60) of the terminals (50) installed at users' sites; in particular, the concentrator device (1) uses two different types of modem (45, 55) in such a way to differentiate the communication channels and to send the signals to different frequency carriers in the available band A (3-95 kHz).

## Description

The present invention relates to a concentrator device for consumption remote management systems.

The reading of industrial or domestic consumptions, such as electricity, gas or water, is traditionally performed manually.

However, self-reading procedures by the user, or methods for estimating consumptions, have recently spread so as to avoid performing readings directly at the different users; moreover, such automated systems imply considerable investments of capitals relating to new installations of meters and connections for remote communication (for example, via radio).

Moreover, two-way radio devices are known, provided with multifrequency oscillators, adapted to transmit the information relating to the measurements carried out by meters associated to a series of suitable sensors to the above concentrator and hence, to an operative control station.

Similarly, always using the above multifrequency two-way radio devices, in case of a request made by the user it is possible to display the same detected measurements on a screen of a suitable terminal.

In this way, the performed measurement is displayed to the user, through the domestic terminal, and at the same time to a control centre of the supplier, on a dedicated console, thus allowing a quick verification of the data by simply comparing the performed readings. Moreover, any attempt of fraud in reporting the measurement by the user and any possibility of tampering the system are prevented.

Finally, at the control station it is possible to store and update payment rates, fix a total rate starting from a series of readings made by the meter in different periods, and generically manage the measurement data provided by the meters, providing information and/or notices relating to the service on the user terminal (for example, supply interruption notices due to maintenance works).

However, in this case each electronic meter installed at the supplier strictly depends on the respective user terminal, with the unavoidable consequence that terminals and meters must be univocally realised for the purpose and for each application.

Purpose of the present invention, therefore, is that of overcoming the above disadvantages and in particular, that of indicating a concentrator device for consumption remote management systems, which should allow separately and independently managing the measurement data detected by the electronic meters and the information and/or notices sent to the user terminals, and which should at the same time allow simultaneously providing the measurements relating to consumptions (water, electrical energy, gas or other) both to the supplier and to the user.

Another purpose of the present invention is that of realising a concentrator system for consumption remote management systems, in particular domestic consumptions, which should prevent any fraud or tampering attempt on the consumptions by the user.

Further purpose of the present invention is that of indicating a concentrator device for consumption remote management systems to be installed in the MT/BT electrical cabin, which may be combined with other modular equipment and display devices and domotic systems in general.

Last but not least, another purpose of the present invention is that of indicating a concentrator device for consumption remote management systems which should be easy to install and to use, as well as efficient, functional, safe and reliable.

These and other purposes according to the present invention are achieved by realising a concentrator device for consumption remote management systems according to claim 1.

Advantageously, a separate and independent management of the applications is realised, which on the one side relate to the handling of measurement data of the electronic meters of each consumption and on the other side, to the sending of messages/notices or information by the service provider on the user terminal display.

Such situation is obtained by differentiating the communication channels, that is, by providing different frequency carriers, in a chronological sequence, in the available band A (3-95 kHz).

Further features and advantages of a concentrator device for consumption remote management systems, according to the present invention, will appear more clearly from the following exemplificative and nonlimiting description made with reference to the attached drawings. In such drawings:
- Figure 1 schematically shows a circuit configuration relating to the use of a concentrator device for consumption remote management systems, according to the present invention;
- Figure 2 schematically shows a practical embodiment of the concentrator device of figure 1, according to the present invention.

With reference to the above figures, reference numeral 100 generically indicates a tele-measurement block or meter block, containing a sensor device and a meter device, connected to a peripheral processing unit with relevant two-way radio.

The tele-measurement block 100 is electrically connected, through conductor 15, to an MT/BT cabin 10. The signal transmission between the concentrator device 1 and the domestic environment wherein there is installed each terminal 50, which displays the consumptions of particular uses through a display screen 60, can be performed by conveyed waves on various frequency bands.

Moreover, besides user terminal 50, the concentrator device 1 is able to communicate with an optional domotic system 70 and with a central system 200, which delivers the supply to the user.

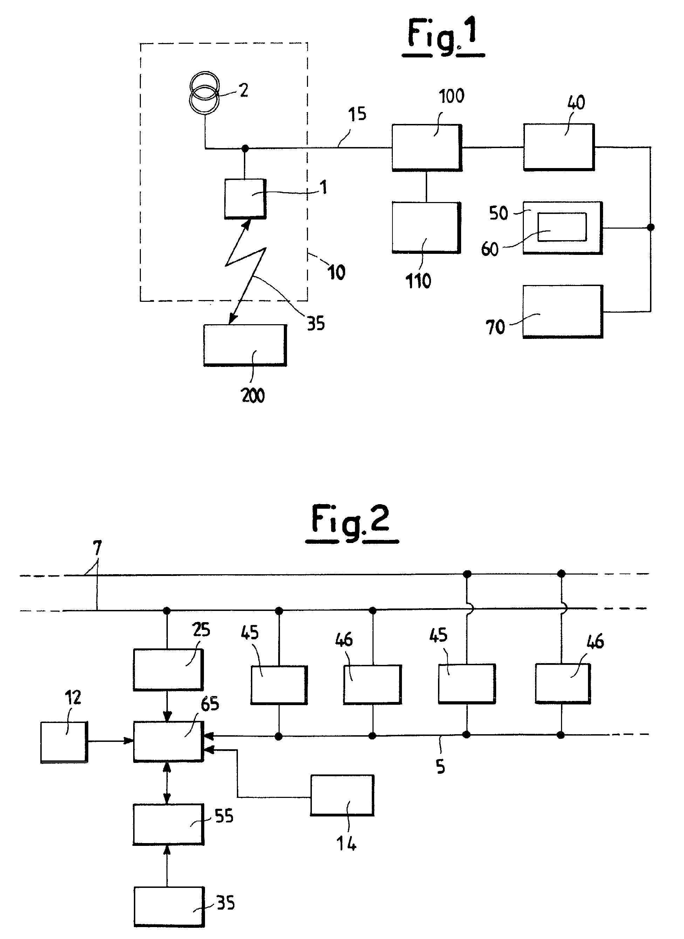

In particular, in the embodiment of figure 1, wherein a consumption measuring system is connected to an internal domotic system 70, it is furthermore provided to integrate a filter 40 downstream of the tele-measurement device 100, so as to regulate access and separate the traffic inside the user's house from the external one.

The block filter 40 is able to separate communication channels between the user and the supplier, and it is also used to prevent access to the user's system by any ill-intentioned person intending to alter the reading values.

In practice, the user terminals 50 are able to receive, via waves (or via radio) conveyed by the central system 200 the data relating to consumptions, and each tele-measurement block 100 is provided with a predetermined identification code so as to communicate with the central system 200 only when the information is addressed to that particular code.

In this way, it is possible to immediately perform the reading of the networked meters 100 in real time from the central system 200, so as to always have the data relating to the consumptions of each user.

Each tele-measurement block 100 only replies to the queries of the central supply system 200, which include the univocal identification code of that meter block 100; moreover, the user can request the display of the consumption reading and/or receive messages or other information on the user display 60.

Actually, according to the invention, the electronic meter remote reading and communication system comprises a series of terminals 50 provided with displays 60 for displaying information and/or notices and requesting information by the user.

For the purpose of separately and independently managing the applications relating to the management of measurement data detected by the meter block 100 and to the processing of the information displayed on screens 60 of the user terminals 50, the communication channels are differentiated using different frequency carriers in the available band A (3-95 kHz).

Operatively, a concentrator device 1 is installed into the MT/BT electrical cabin 10, downstream of voltage transformer 2, which is capable of operating also in case of lack of power supply at 230 Volts, thanks to the presence of storage batteries 25 and moreover, thanks to a suitable coupling device 110, it is possible to keep the conveyed-wave communication channel open to the user terminal 60 also in case of opening of the switch contained in the meter block 100.

Such concentrator 1 allows setting up independent communications between the meter block 100 and concentrator and user terminals 50 and the same concentrator.

The separation of communications occurs by using different protocols and different frequency bands on the same line to better use the available band A (3-95 kHz). In this way, moreover, the communication protocols of the meter block 100 and of screen 60 of each user terminal 50 are made independent of one another, thus allowing in all cases the use of standard measurement devices (meters) available on the market.

This is possible thanks to the use of two different types of modem, contained into the concentrator device 1, which transmit on the same communication line, indicated with reference numeral 5 in figure 2, which for example can be an RS485 line.

In particular, a first type of modem 45 is provided, connected to the phase conductors 7, for the conveyed-wave transmission to the user terminals 50, and a second type of modem 46 for remote reading procedures; moreover, a further telephone modem, indicated with reference numeral 55 in figure 2, is used for the communication between micro-calculator 65 of the concentrator device 1 and the telephone line or cellular network (for example, of the GSM type) 35, which allows the communication between concentrator 1 and the central supply system 200.

The separate management of remote management applications is obtained, in particular, by making modems 45 and 46 transmit on the same communication line and, respectively, on different frequencies, suitably distant from one another.

In this way, the central supply system 200 can manage the measurement data coming from the tele-measurement block 100 of each user independently of the possibility of sending notices and/or messages that system 200 can display on displays 60 of each terminal 50; moreover, the conveyed-wave communication performed between supplier and user, as well as between meter block and supplier, allows preventing any fraud attempt by the user and allows obtaining a safe and reliable reading system since it is controlled on more sides.

Micro-calculator 65 of the concentrator device 1, finally, is connected to at least one clock 12, which provides a clock signal, and to at least one memory 14 for data storage.

The features of the concentrator device for consumption remote management systems, object of the present invention, as well as its advantages, clearly appear from the above description.

Finally, it is clear that several variants can be made to the above concentrator device without departing from the novelty principles of the inventive idea, and it is also clear that in the practical embodiment of the invention the materials, shapes and sizes of the illustrated details can be of any type according to the requirements, and the same can be replaced with other technically equivalent details.

## Claims

1. Concentrator device (1) for consumption remote management systems, adapted to be connected between at least one central use supply system (200) and at least one meter or tele-measurement block (100), which provides the consumption reading data to both said central system (200) and to a plurality of user terminals (60) and/or to at least one domotic system (70), **characterised in that** it comprises at least one micro-calculator (65) connected to two different types of modem (45, 46) transmitting on at least one communication line (5) on different frequencies spaced from one another.

2. Concentrator device (1) according to claim 1, **characterised in that** said modems (45, 46) transmit on different communication channels and are provided with different frequency carriers, in a chronological sequence, in the available band A (3-95 kHz).

3. Concentrator device (1) according to claim 1, **characterised in that** said meter or tele-measurement block (100) is electrically connected to at least one MT/BT cabin (10) and it comprises at least one sensor device and at least one meter device, connected to a peripheral processing unit with relevant two-way radio means for data communication.

4. Concentrator device (1) according to claim 1 or 2, **characterised in that** it is capable of sending signals to said user terminals (50) and displaying information through at least one display screen (60), through a conveyed wave transmission in various frequency bands, said concentrator (1) being capable of communicating with said central supply system (200).

5. Concentrator device (1) according to claim 4, **characterised in that** said user terminals (50) are provided with a rechargeable battery (25) to allow the user to use them also without power supply.

6. Concentrator device (1) according to claim 3, **characterised in that** said meter (100) is connected to at least one block filter (40) adapted to separate the communication channels between user and supplier.

7. Concentrator device (1) according to claim 3, **characterised in that** said meter (100) is provided with a coupling device (110) capable of keeping the conveyed-wave communication channel open also in case of opening of the switch associated to said meter (100).

8. Concentrator device (1) according to claim 3, **characterised in that** it can be installed into said MT/BT electrical cabin (10) downstream of a voltage transformer (2).

9. Concentrator device (1) according to claim 1, **characterised in that** said modems (45, 46) use different protocols and different frequency bands on the same communication line (5) so as to make the communication protocols of said meter block (100) and of each user terminal (50) independent of one another.

10. Concentrator device (1) according to claim 9, **characterised in that** at least two modems (45, 46) connected to phase conductors (7) are used for the conveyed-wave transmission to said user terminals (50) and for the remote reading procedures, whereas at least another modem (55), of the telephone type, is provided to send signals between said micro-calculator (65) and at least one telephone line or cellular network (35) of communication between said concentrator device (1) and said central supply system (200).

11. Concentrator device (1) according to claim 10, **characterised in that** said micro-calculator (65) is connected to at least one clock (12) that provides a clock signal, and to at least one memory (14) for data storage.
